(19) **Europäisches Patentamt / European Patent Office / Office européen des brevets**

(11) **EP 4 756 725 A1**

(12) **EUROPEAN PATENT APPLICATION**
published in accordance with Art. 153(4) EPC

(43) Date of publication:
**10.06.2026 Bulletin 2026/24**

(21) Application number: **25790505.9**

(22) Date of filing: **08.01.2025**

(51) International Patent Classification (IPC):
*G06T 17/20* (2006.01)   *G06T 7/60* (2017.01)
*G06T 15/04* (2011.01)   *G06T 7/00* (2017.01)
*H01M 4/36* (2006.01)   *H01M 4/66* (2006.01)
*H01M 4/02* (2006.01)

(52) Cooperative Patent Classification (CPC):
**G06T 7/00; G06T 7/60; G06T 15/04; G06T 17/20; H01M 4/02; H01M 4/36; H01M 4/66;** Y02E 60/10

(86) International application number:
**PCT/KR2025/000397**

(87) International publication number:
**WO 2025/220844 (23.10.2025 Gazette 2025/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2024 KR 20240052239**

(71) Applicant: **LG Energy Solution, Ltd.**
**Seoul 07335 (KR)**

(72) Inventors:
• **PARK, Sun Ho**
**Daejeon 34122 (KR)**

• **PARK, Joonam**
**Daejeon 34122 (KR)**
• **LEE, Hojin**
**Daejeon 34122 (KR)**
• **KIM, Hyeongseok**
**Daejeon 34122 (KR)**
• **LEE, Bora**
**Daejeon 34122 (KR)**

(74) Representative: **Goddar, Heinz J. et al**
**Boehmert & Boehmert**
**Anwaltspartnerschaft mbB**
**Pettenkoferstrasse 22**
**80336 München (DE)**

(54) **ELECTRONIC DEVICE, AND METHOD FOR MODELING ACTIVE MATERIAL PARTICLES INCLUDED IN COATED AND ROLLED ELECTRODE STRUCTURE THEREOF**

(57)  Provided is a method for modeling active material particles included in a coated electrode structure of an electronic device, comprising the steps of: acquiring an image related to a cross-section of at least one active material particle; calculating the curvature of the at least one active material particle on the basis of the image; checking a comparison result between the curvature and a threshold value; and modeling, on the basis of the comparison result and the particle size distribution of the at least one active material particle, the at least one active material particle included in a coated electrode structure.

FIG. 2

# Description

## Technical Field

The present disclosure claims the benefit based on Korean Patent Application No. 10-2024-0052239 filed on April 18, 2024, which is incorporated herein by reference in its entirety.

The present disclosure relates to an electronic device and a method of modeling an active material included in a coated and rolled electrode structure thereof.

## Background Art

Modeling an active material particle within a battery electrode structure is an essential process to optimize performance of an electrochemical storing device and to innovate a design thereof. The active material particle is a major component provoking an electrochemical reaction on an electrode of a battery, and physical and chemical characteristics thereof directly affect energy density, power density, life, and stability of a battery. By precisely designing and predicting a size, a shape, and a distribution of a particle through modeling, an electrode structure may be optimized to exhibit performance close to a theoretical maximum capacity. In addition, by simulating electrical connectivity between particles, a spread path of lithium ion, a path of electronic conduction, and the like, a design guideline to improve a charging speed and a life cycle of a battery may be derived.

Furthermore, modeling an active material particle may play an essential role for improving safety and reliability of a battery. Problems of thermal and chemical instability that may occur during battery operation occurs mostly due to non-uniform reaction of an active material particle. Through precise modeling at a particle level, such a non-uniform reaction may be predicted and managed in advance, which may increase safety of a battery and reduce risk of an unexpected accident. It is an essential condition to use a battery safely and efficiently in various fields such as electric vehicles, storage systems for renewable energy, and portable electronic devices. Accordingly, development and application of a highly advanced modeling method has become a central element for sustainable development of a battery technology.

However, a general method of modeling an active material particle has a disadvantage of not exactly simulating an active material shape in a coating process and not simulating cracking of a secondary particle and the following filling phenomenon of a packing particle in a rolling process during the course of electrode structure formation.

## Detailed Description of the Invention

## Technical Goals

The example embodiments of the present disclosure are to provide an electronic device and a method of modeling an active material particle included in a coated electrode structure thereof. More specifically, a goal is to exactly simulate an active material shape in a coating process and simulate cracking of a secondary particle in a rolling process and the following filling phenomenon of a packing particle during the course of electrode structure formation.

Technical goals to be achieved by the example embodiments are not limited thereto, and other technical goals may be inferred from example embodiments below.

## Technical solutions

An aspect of the present disclosure may provide a method of modeling an active material particle included in a coated electrode structure by an electronic device, the method including obtaining an image related to a cross section of at least one active material particle, based on the image, calculating a curvature of the at least one active material particle, identifying a comparison result of the curvature and a threshold, and based on the comparison result and a particle size distribution of the at least one active material particle, modeling the at least one active material particle included in a coated electrode structure.

In an example embodiment of the present disclosure, modeling the at least one active material particle may include, when the comparison result indicates that the curvature exceeds the threshold, based on the curvature and a first parameter, calculating a number of vertexes, based on the number of vertexes, identifying a three-dimensional (3D) shape of the at least one active material particle, and based on the 3D shape and the particle size distribution, modeling the at least one active material particle.

In addition, in an example embodiment of the present disclosure, identifying the 3D shape may include, sampling vertexes corresponding to the number of vertexes on a virtual sphere, and based on the vertexes, identifying the 3D shape.

In addition, in an example embodiment of the present disclosure, modeling the at least one active material particle may include, when the comparison result indicates that the curvature is equal to or less than the threshold, based on the curvature and a second parameter, calculating a number of vertexes, based on the number of vertexes, identifying a 3D shape of the at least one active material particle, increasing roughness of the 3D shape by adjusting an vertex of the 3D shape while maintaining an aspect ratio of the at least one active material particle that is identified based on the image, and based on the 3D shape of which the roughness is increased and the particle size distribution, modeling the active material particle.

Furthermore, in an example embodiment of the present disclosure, the aspect ratio may be identified by calculating an aspect ratio of an active material particle corresponding to at least one quantile on the particle size distribution among a plurality of active material particles.

In addition, in an example embodiment of the present disclosure, calculating the curvature may include, based on the image, calculating an average of curvatures of a plurality of active material particles as the curvature of the active material particle.

Furthermore, in an example embodiment of the present disclosure, calculating the curvature may include, based on the image, calculating a maximum diameter corresponding to a circle of a maximum size included in a boundary corresponding to the cross section of the at least one active material particle, calculating a diameter of each circle in contact with at least a portion of the boundary corresponding to the cross section, and calculating the curvature by dividing an average of the diameter of each circle in contact with at least the portion of the boundary corresponding to the cross section by the maximum diameter.

Furthermore, in an example embodiment of the present disclosure, modeling the at least one active material particle may include modeling a plurality of the at least one active material particle to have a 3D shape simulated based on the comparison result and have at least one size value identified based on the particle size distribution.

In addition, in an example embodiment of the present disclosure, obtaining the image may include, obtaining the image by shooting a current collector coated with the active material particle with a scanning electron microscope (SEM).

In addition, in an example embodiment of the present disclosure, the method may further include, by injecting the at least one active material particle into a particle size analyzer, identifying the particle size distribution of the active material particle that is measured by the particle size analyzer.

In addition, in an example embodiment of the present disclosure, the method may further include modeling an electrode structure including the at least one active material particle.

Another aspect of the present disclosure may provide an electronic device modeling an active material particle included in an electrode structure, the electronic device including a processor and a memory configured to store one or more instructions. The processor, by performing the one or more instructions, is configured to obtain an image related to a cross section of at least one active material particle, based on the image, calculate a curvature of the at least one active material particle, identify a comparison result of the curvature and a threshold, and based on the comparison result and a particle size distribution of the at least one active material particle, model the at least one active material particle included in a coated electrode structure.

In addition, another aspect of the present disclosure may provide a method of modeling cracking of a rolled secondary particle and filling of a packing particle by an electronic device, the method including obtaining an image with regard to an electrode structure including at least one secondary particle, based on the image, identifying a distribution of a diameter of a virtual ellipsoid in at least one space related to a pore included in the electrode structure, based on the distribution, modeling at least one packing particle generated by cracking of the secondary particle caused by a rolling process on at least a portion of the space, and based on a volume of the packing particle, modeling cracking within the secondary particle.

In an example embodiment of the present disclosure, identifying the distribution may include identifying each virtual maximum ellipsoid included in each of the pore and identifying a distribution of a diameter of each of the maximum ellipsoid as the distribution.

In an example embodiment of the present disclosure, modeling the packing particle on at least the portion of the pore includes identifying information about a virtual ellipsoid corresponding to at least one quantile on the distribution, based on the information about the virtual ellipsoid, identifying a shape of the packing particle, and, modeling the packing particle having at least one size corresponding to a diameter of the virtual ellipsoid corresponding to the quantile and having the identified shape of the packing particle on the at least a portion of the pore.

In an example embodiment of the present disclosure, modeling the packing particle on at least the portion of the pore may include modeling the packing particle so that a quantity of the packing particle increases proportionally as the packing particle is closer to a contact surface of the electrode structure with a separator.

In an example embodiment of the present disclosure, modeling the pore caused by cracking on the secondary particle may include modeling the pore on the secondary particle so that a volume of the pore on the secondary particle corresponds to the volume of the packing particle.

In an example embodiment of the present disclosure, modeling the pore caused by cracking on the secondary particle may include modeling the pore so that the secondary particle includes a fibrous pore.

In an example embodiment of the present disclosure, obtaining the image may include identifying a model simulating an electrode structure in which a slurry is coated on a current collector, and based on the model, obtaining the image with regard to the electrode structure prior to performing the rolling process.

Another aspect of the present disclosure may provide an electronic device modeling an active material particle included in an electrode structure, the electronic device including a processor and a memory configured to store one or more instructions. The processor, by performing the one or more instructions, is configured to obtain an image with regard to an electrode structure including at least one secondary particle, based on the image, identify a distribution of a diameter of a virtual ellipsoid in at least one pore included in the electrode structure, based on the distribution, model at least one packing particle generated by cracking of the secondary particle caused by a rolling process on at least a portion of the pore, and based on a volume of the packing particle, model a pore caused by cracking on the secondary particle.

Another aspect of the present disclosure may provide a non-transitory computer readable recording medium that records a program for executing the modeling method described above on a computer.

Details of example embodiments are included in the detailed description and drawings.

**Effects of the Invention**

According to the example embodiments, it is possible to expect one or more of the following effects.

According to the example embodiments of this specification, an active material shape in a coating process during the course of electrode structure formation may be exactly simulated.

In addition, according to the example embodiments of this specification, cracking of a secondary particle in a rolling process and the following filling phenomenon of a packing particle may be simulated.

Furthermore, according to the example embodiments of this specification, through modeling of an active material particle, optimizing performance and innovating a design for an electrochemical storing device may be achieved.

Effects of the present disclosure are not limited to the above-mentioned effects, and other unstated effects may be clearly understood by those of ordinary skill in the art from the appended claims.

**Brief Description of Drawings**

FIG. 1 is a diagram illustrating a relationship between an electronic device, an analyzing equipment, and a microscope according to an example embodiment.
FIG. 2 is a flowchart illustrating a method of modeling an active material particle included in a coated electrode structure according to an example embodiment.
FIGS. 3A and 3B are exemplary diagrams illustrating an image according to an example embodiment and an outline image of each active material particle based on the image.
FIG. 4 is a diagram illustrating a manner of calculating a curvature according to an example embodiment.

FIG. 5 is a flowchart illustrating a method of modeling an active material particle included in an electrode structure according to an example embodiment.
FIG. 6 is an exemplary diagram illustrating a modeled electrode structure according to an example embodiment.
FIG. 7 is an example of an image shooting a rolled electrode structure where cracking of a secondary particle and the following filling phenomenon of a packing particle occur.
FIG. 8 is a flowchart illustrating a method of modeling cracking of a secondary particle caused by a rolling process and the following filling phenomenon of a packing particle according to an example embodiment.
FIG. 9 is an exemplary diagram illustrating a virtual ellipsoid generated on at least a portion of a pore included in an image according to an example embodiment.
FIG. 10 is an exemplary diagram illustrating an electrode structure in which cracking of a secondary particle and filling phenomenon of a packing particle are modeled according to an example embodiment.
FIG. 11 is a block diagram illustrating an electronic device according to an example embodiment.

**Mode for Carrying Out the Invention**

Terms used in example embodiments are selected, as much as possible, from general terms that are widely used at present while taking into consideration the functions of the present disclosure, but these terms may be replaced by other terms based on intentions of those skilled in the art, judicial precedent, the advent of new technologies, or the like. Also, in a particular case, terms that are arbitrarily selected by the applicant of the present disclosure may be used. In this case, the meanings of these terms will be described in detail in corresponding description parts of the disclosure. Accordingly, it should be noted that the terms used herein should not be construed simply as their designations but based on practical meanings thereof and the whole content of the present disclosure.

Throughout the specification, when an element is referred to as "comprising or including" another element, the element should not be understood as excluding other elements unless particularly otherwise indicated, and the element may further include at least one other element.

Throughout the specification, the expression "at least one of a, b, and c" may encompass "a alone," "b alone," "c alone," "a and b," "a and c," "b and c," or "all of a, b, and c."

"Terminal" mentioned below may be embodied as a computer or a portable terminal that may access to a server or another terminal through a network. Here, the computer may include, for example, a notebook equipped with a web browser, a desktop, and a laptop, and the portable terminal may be a wireless communication device ensuring portability and mobility and include all types of handheld-based wireless communication devices, for example, a smartphone, a tablet PC, and a communication-based terminal such as international mobile telecommunication (IMT), code division multiple access (CDMA), w-code division multiple access (W-CDMA), and long term evolution (LTE).

Hereinafter, example embodiments of the present disclosure will be described in detail with reference to the accompanying drawings for those of ordinary skill in the art to which the present disclosure pertains to easily implement the example embodiments. However, the present disclosure may be embodied in various different shapes and not limited to the example embodiments described herein.

Hereinafter, example embodiments of the present disclosure are described in detail with reference to the drawings.

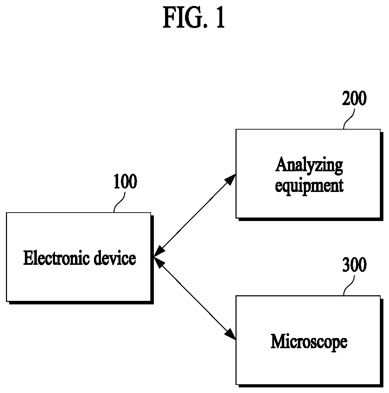

FIG. 1 is a diagram illustrating a relationship between an electronic device, an analyzing equipment, and a microscope according to an example embodiment.

Referring to FIG. 1, an electronic device 100 may operate in connection with an analyzing equipment 200 and a microscope 300. Meanwhile, in FIG. 1, components that are only related to the present example embodiment are illustrated. Accordingly, it should be understood by those skilled in the art that other general-purpose components in addition to those illustrated in FIG. 1 may be further included.

The electronic device 100, although described below, may include a memory and a processor that may perform methods for modeling below. According to example embodiments, the electronic device 100 may operate in connection with at least one of the analyzing equipment 200 and the microscope 300. Here, operating in connection may not necessarily refer to operating by being directly connected. For example, the description may indicate that the electronic device 100 receives and calculates information obtained through the analyzing equipment 200 and the microscope 300.

As the analyzing equipment 200, various analyzing equipment that may analyze a particle size of an active material particle may be used. For example, various analyzers such as a laser particle size analyzer, dynamic light scattering equipment, a suspensions particle size analyzer, or a powder characterization analyzer may be used, but is not limited to those enumerated above, and any device that may analyze the particle size of the active material particle may be available.

In addition, according to an example embodiment, the microscope 300 may be a scanning electronic microscope (SEM), but is not limited thereto, and although described below, any microscope that may identify a cross section of the active material particle may be available.

Based on the electronic device 100, a method of modeling an active material shape in a coating process and a method of modeling cracking of a secondary particle in a rolling process and a following filling phenomenon of a packing particle during the course of electrode structure formation will be separately described below.

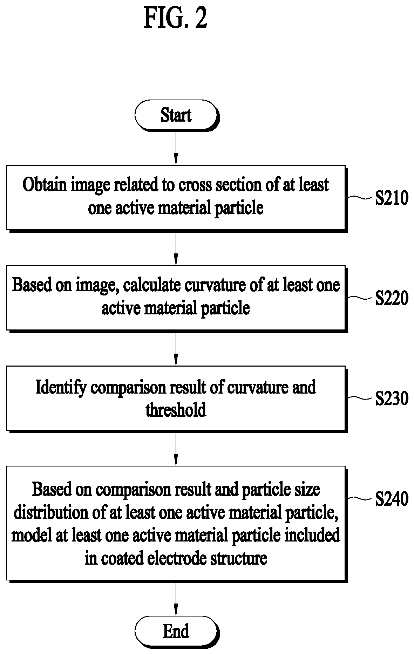

First, with reference to FIG. 2, a method of modeling an active material particle included in a coated electrode structure may be described.

FIG. 2 is a flowchart illustrating the method of modeling the active material particle included in the coated electrode structure according to an example embodiment.

Referring to FIG. 2, in operation S210, the electronic device 100 may obtain an image related to a cross section of at least one active material particle. In operation S220, the electronic device 100, based on the image, may calculate a curvature of the at least one active material particle. In operation S230, the electronic device 100 may identify a comparison result of the curvature and a threshold. In operation S240, the electronic device 100, based on the comparison result and a particle size distribution of the at least one active material particle, may model the at least one active material particle included in a coated electrode structure. Each operation will be described more specifically below.

According to an example embodiment, the electronic device 100 may identify a particle size distribution (PSD) of the active material particle. The PSD may be a distribution identified by analyzing the active material particle through the analyzing equipment 200, and based on the PSD, a size of the active material particle corresponding to each quantile such as D10, D50, D90, Dmin and Dmax may be identified, and a shape of the active material particle corresponding to each quantile may also be identified.

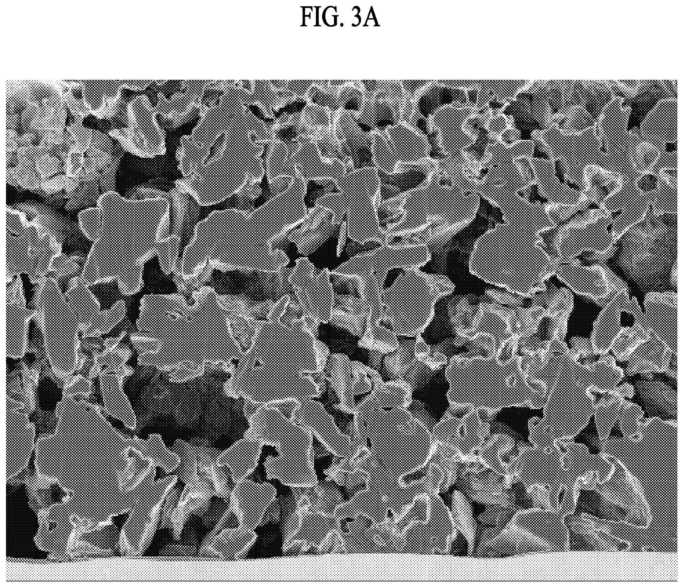

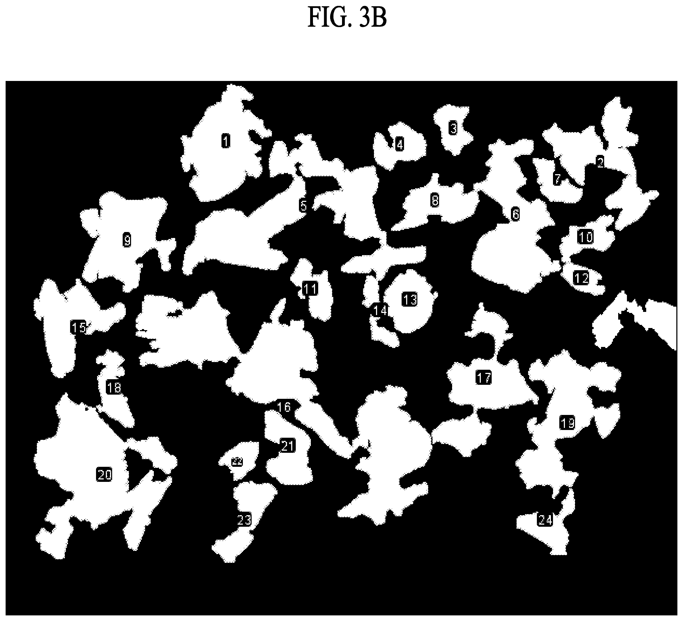

In addition, the electronic device 100 may identify an image with regard to the cross section of the active material particle that is identified by shooting a current collector coated with the active material particle through the microscope 300. According to an example embodiment, the active material particle here may be coated on the current collector with a condition of purely including only one type of a particle as an active material and a binder. In other words, after coating not a slurry where two or more types of active materials and a binder are mixed, but a slurry purely including only one type of the particle as the active material and the binder on the current collector, a cross-sectional image thereof may be shot through the microscope 300. However, the image is not limited thereto. To describe an example of such an image, FIGS. 3A and 3B are referred to.

FIGS. 3A and 3B are exemplary diagrams illustrating an image according to an example embodiment and an outline image of each active material particle based on the image.

Referring to FIG. 3A, an example may be shown where a microscope shoots a current collector coated with an active material particle. Referring to FIG. 3B, an outline image illustrating a boundary line of each active material particle, which may be identified by calculating such an image, is shown.

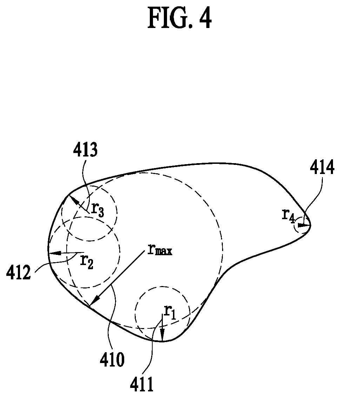

Subsequently, the electronic device 100, based on the image or the outline image resulting from calculating the image, may calculate a curvature of at least one active material particle. The curvature may be calculated as a numerical value that indicates how close a curving shape of the active material particle is to a curve and calculated in various manners. For example, the curvature used in the present disclosure may refer to Roundness among various indicators used to evaluate a shape of a particle in the field of material engineering. To describe an example of a curvature calculation manner in the case where Roundness indicator is used, FIG. 4 is referred to.

FIG. 4 is a diagram illustrating a manner of calculating a curvature according to an example embodiment.

Referring to FIG. 4, the curvature of the active material particle may be calculated based on a boundary of the particle. Specifically, after drawing a virtual circle that is in contact with the boundary, which is a convex curve from the inside of the boundary among each portion of the boundary, radii 411, 412, 413, and 414 thereof may be calculated. Also, at the same time, after drawing a virtual circle of a maximum size inscribed within the boundary, a radius 410 thereof may be calculated. Subsequently, based on a ratio of an average of the radii of the virtual circles in contact with the boundary, which is the convex curve among each portion of the boundary, to the radius of the virtual circle of the maximum size, the curvature may be calculated. Such a process may be represented by the equation 1 below.

[Equation 1]

$$Roundness = \frac{\sum r_i}{r_{max}} \times \frac{1}{N}$$

In the equation, $\sum r_i$ may refer to a sum of the radii of virtual circles in contact with the boundary, which is the convex curve among each portion of the boundary, and $r_{max}$ may refer to the radius of the virtual circle of the maximum size, and N may refer to the number of virtual circles in contact with the boundary, which is the convex curve among each portion of the boundary. According to such a curvature calculation manner, the active material particle may be more in a shape made of curves without any sharp angles as the value approaches 1.

According to an example embodiment, the electronic device 100 may identify a value of a curvature that may represent a corresponding active material based on each curvature calculated with regard to each active material particle. For example, the electronic device 100 may identify an average of curvatures calculated with regard to each particle corresponding to the active material. Alternatively, a value of a curvature with regard to an active material particle having a median size identified based on a PSD may be identified. With other various manners, the electronic device 100 may identify the value of the curvature that may represent the active material.

Subsequently, the electronic device 100 may compare the curvature and a threshold and identify a comparison result of the curvature and the threshold. Here, the threshold may be a hyper-parameter, and although various values may be possible depending on a design, may have a value such as 0.5 or 0.6 that may distinguish a circle from an oval. In this case, depending on whether the curvature exceeds or is less than or equal to the threshold, an identified three-dimensional (3D) shape of the active material particle may vary. First, the case where the curvature exceeds the threshold is described below.

According to an example embodiment, the electronic device 100, when the comparison result indicates that the curvature exceeds the threshold, may calculate the number of vertexes based on the curvature and a first parameter. Here, the first parameter may have a characteristic to allow the number of vertexes to be calculated greater when calculated with the curvature, comparing to a second parameter corresponding to a case in which the curvature is less than or equal to the threshold. As an example, at least one of a first coefficient and a first intercept included in the first parameter may be greater than at least one of a second coefficient and a second intercept included in the second parameter, but is not limited thereto. According to an example embodiment, based on the curvature and the first parameter, the number of vertexes may be calculated as in the equation 2 below.

[Equation 2]

$$N_{point} = int(20 \times roundness) + 15$$

Subsequently, the electronic device 100, based on the number of vertexes, may identify a 3D shape of at least one active material particle. More specifically, as the number of vertexes is identified, the electronic device 100 may sample a vertex as many as the identified number of vertexes on a virtual sphere. Here, the virtual sphere may have a random radius and the random number of dots that may be sampled on a surface. In this case, the electronic device 100 may randomly sample vertexes as many as the number of vertexes on the surface of the virtual sphere. For example, if the number of vertexes is 29, 29 vertexes may be randomly sampled on the surface of the virtual sphere. Although described below, when the curvature exceeds the threshold as such, the number of vertexes is calculated relatively more than when the curvature is less than or equal to the threshold, and as a result, the shape of the active material particle may be derived closer to a circle.

Subsequently, the case where the curvature is less than or equal to the threshold is described below.

According to an example embodiment, the electronic device 100, when the comparison result indicates that the curvature is less than or equal to the threshold, may calculate the number of vertexes based on the curvature and the second parameter. Here, as described above, the second parameter may have a characteristic to allow the number of vertexes to be calculated less than the first parameter. According to an example embodiment, based on the curvature and the second parameter, the number of vertexes may be calculated as in the equation 3 below.

[Equation 3]
$$N_{point} = int(15 \times roundness) + 5$$

The electronic device 100, based on the number of vertexes, may identify a 3D shape of at least one active material particle. Identifying the 3D shape here may be performed by using a manner of sampling the vertex based on the virtual sphere described above. Alternatively, as described above, as the number of vertexes may be derived less than when the curvature exceeds the threshold, the 3D shape derived as a result of sampling the vertex on the surface of the virtual sphere may be relatively far from a circle shape and spiky.

Subsequently, the electronic device 100 may increase roughness of the 3D shape by adjusting the vertex of the 3D shape identified as such. More specifically, the electronic device 100, while maintaining an aspect ratio of the at least one active material particle identified based on an image, may randomly adjust the vertex of the 3D shape. For example, if one of the aspect ratios of the active material particle identified based on the image is 1:2, the electronic device 100 may make a shape of the active material particle spikier, in other words, increase the roughness, by randomly adjusting the vertex while maintaining the aspect ratio of the 3D shape as 1:2.

According to an example embodiment, the aspect ratio that serves as a reference for increasing the roughness may be identified based on an aspect ratio of an active material particle having a size corresponding to at least one quantile on a PSD among active material particles. As an example, based on an aspect ratio of an active material particle having a size corresponding to D50, in other words, a median, on the PSD, the aspect ratio to be the aforementioned reference may be identified. In other words, the active material particle having the size corresponding to the median on the image may be found and the aspect ratio thereof may be identified. Alternatively, based on an average of aspect ratios of at least one active material particle on the image, the aspect ratio that serves as the reference for increasing the roughness may be identified. In other words, any value that may represent the aspect ratio of the active material particle may be used.

Subsequently, the electronic device 100, with the 3D shape identified based on the comparison result of the curvature and the threshold, may model the active material particle to have a size identified based on the PSD. In other words, the active material particle may be modeled to have various sizes following the PSD while having the same 3D shape. For example, the active material particle having each of sizes corresponding to D10, D50, D90, Dmin, and Dmax may be modeled. In addition, as an additional example, the number of active material particles having a size corresponding to D50 may be the most, sizes corresponding to D10 and D90 may be the next most, and the number of active material particles having sizes corresponding to Dmin and Dmax may be the least.

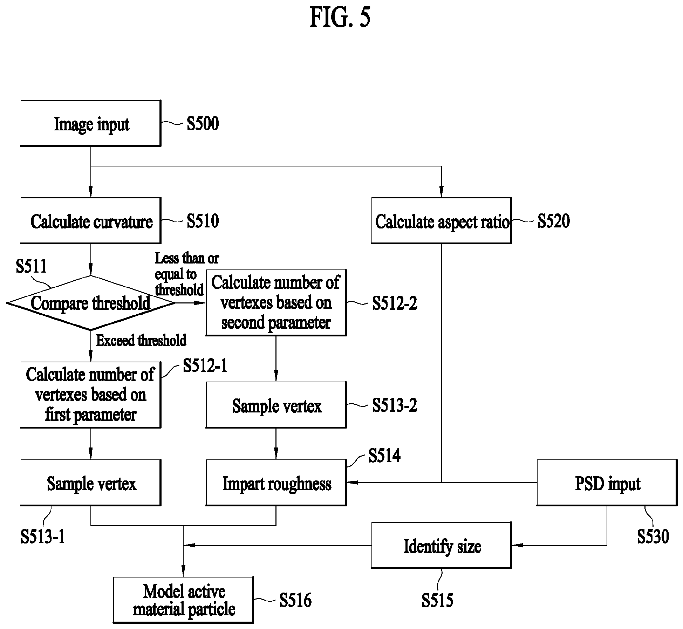

To describe such a series of processes at once, FIG. 5 is referred to.

FIG. 5 is a flowchart illustrating a method of modeling an active material particle included in an electrode structure according to an example embodiment.

Referring to FIG. 5, an image may be inputted to the electronic device 100 in operation S500. In addition, the electronic device 100, in operation S510 and S520, may calculate a curvature and an aspect ratio, respectively. Subsequently, the electronic device 100 may compare the curvature and a threshold in operation S511, when the curvature exceeds the threshold, may calculate the number of vertexes based on a first parameter in operation S512-1, and when the curvature is less than or equal to the threshold, may calculate the number of vertexes based on a second parameter in operation S512-2. The electronic device 100, in operation S513-1 or in operation S513-2, based on the identified number of vertexes, may sample a vertex of a number corresponding thereto on a virtual sphere, and when the curvature is less than or equal to the threshold, based on a PSD inputted in operation S530 and a value of the aspect ratio calculated in operation S520, a process of imparting roughness may be additionally conducted in operation S514. Subsequently, the electronic device 100, in operation S515, may identify a size of an active material particle to be modeled based on the PSD, and based on the identified size as such and a shape of the active material particle identified through the aforementioned process, may model the active material particle in operation S516.

As an additional example embodiment, an example embodiment to model one active material to have multiple 3D shapes is also possible. For example, various 3D shapes may be identified by sampling the vertex multiple times with different random seeds with regard to the calculated number of vertexes or by performing imparting roughness multiple times with different random seeds. Alternatively, the aforementioned process may be performed by classifying active material particles depending on each quantile according to the PSD, performing calculating a curvature for the active material particles by quantile, and comparing the curvature and the threshold for the active material particles classified by quantile.

For example, active material particles classified as D40 to D60 have a curvature exceeding the threshold, while active material particles classified as D5 to D25 have a curvature less than or equal to the threshold. In such a case, the active material particles may be modeled by using the 3D shapes derived differently depending on the curvatures as the aforementioned process.

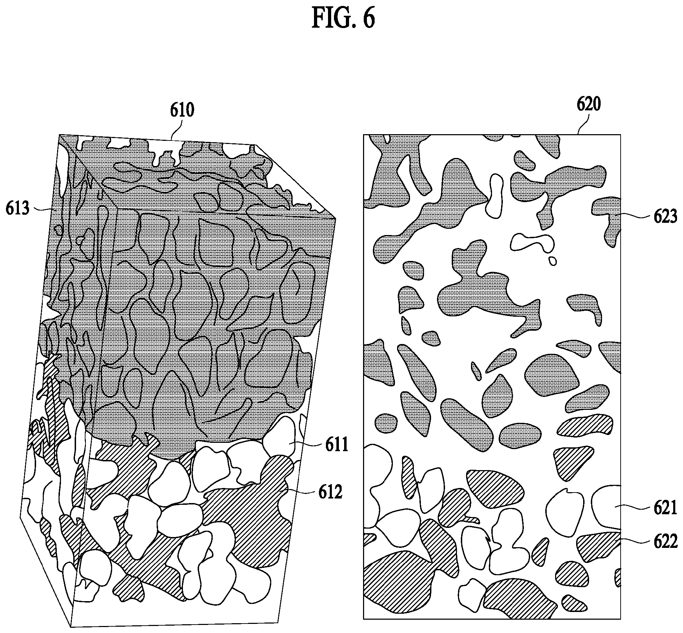

According to example embodiments described above, when modeling at least one active material particle is completed, the electronic device 100 may model an electrode structure including the at least one active material particle. For example, the electronic device 100 may model the electrode structure by stacking or filling the at least one modeled active material particle. According to an example embodiment, the electrode structure may include various types of active material particles, and in such a case, each type of active material particle may be modeled and then randomly stacked to model the electrode structure. To describe an example of the electrode structure modeled as such, FIG. 6 is referred to.

FIG. 6 is an exemplary diagram illustrating a modeled electrode structure according to an example embodiment.

Referring to FIG. 6, an example of an electrode structure in a 3D modeling 610 where various types of active material particles are stacked and a cross section 620 thereof may be identified. In the 3D modeling 610 and the cross section 620, it may be identified that first particles 611 and 621 are relatively round, and second particles 612 and 622 are less round, and third particles 613 and 623 are relatively much rougher and spikier. According to an example embodiment, the first particles 611 and 621 may have a high curvature and an aspect ratio thereof may be close to 1, and the second particles 612 and 622 may have a curvature less than the first particles and an aspect ratio thereof may not be close to 1. The third particles 613 and 623 may have the lowest curvature and an aspect ratio thereof may differ the most from 1.

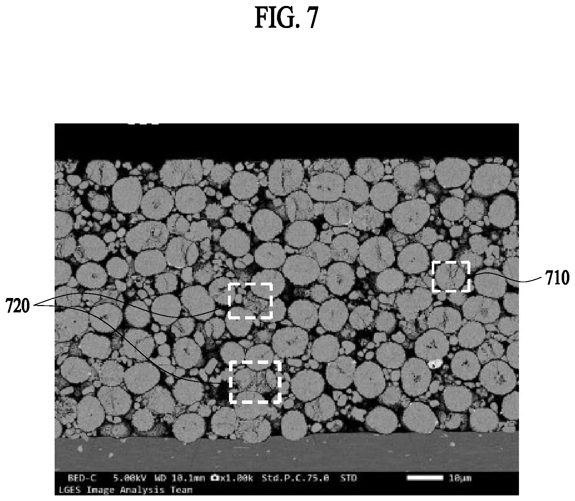

Hereinafter, a method of modeling cracking of a secondary particle in a rolling process and a following filling phenomenon of a packing particle is described. As an example, the secondary particle may be a particle consisting of some single particles putting together and may be included in a positive electrode structure, but is not limited thereto. First, to describe the aforementioned cracking of the secondary particle and the following filling phenomenon of the packing particle, FIG. 7 is referred to.

FIG. 7 is an example of an image shooting a rolled electrode structure where cracking of a secondary particle and the following filling phenomenon of a packing particle occur.

Referring to FIG. 7, it may be identified that at least some of large secondary particles generated when primary particles are put together are cracked 710 in a rolling process, and that packing particles 720 like little crumbs are filled in a pore. In the rolling process, as a roller applies a pressure to the electrode structure, the secondary particle may be cracked 710 due to the pressure, and the packing particles 720 generated due to cracking may be filled in the pore as shown in the drawing. In addition, throughout FIG. 7, it may be identified that the packing particles are more filled in the pore around a separator as a surface on the side of the separator may be more likely to experience higher pressure.

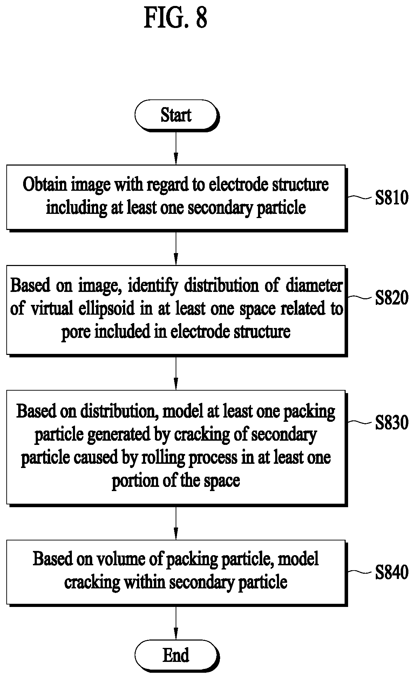

To describe a method of modeling cracking of the secondary particle and the following filling phenomenon of the packing particle as in FIG. 7, FIG. 8 is referred to.

FIG. 8 is a flowchart illustrating a method of modeling cracking of a secondary particle caused by a rolling process and the following filling phenomenon of a packing particle according to an example embodiment.

Referring to FIG. 8, in operation S810, the electronic device 100 may obtain an image with regard to an electrode structure including at least one secondary particle. In operation S820, the electronic device 100 may identify a distribution of a diameter of a virtual ellipsoid in at least one space related to a pore included in the electrode structure based on the image. In operation S830, the electronic device 100, based on the distribution, may model at least one packing particle generated by cracking of the secondary particle caused by a rolling process on at least a portion of the space. In operation S840, the electronic device 100, based on a volume of the packing particle, may model cracking within the secondary particle. Each operation will be described more specifically below.

First, the electronic device 100 may obtain an image with regard to an electrode structure including at least one secondary particle. According to an example embodiment, such an image may be identified from an image identified by shooting the electrode structure where a slurry is actually coated on a current collector before a rolling process with a microscope such as the SEM or a model simulating the electrode structure where the slurry is coated on the current collector before the rolling process. Alternatively, the image may be identified from a model that simulates the electrode structure after the rolling process, but not yet simulates a cracking and packing phenomenon. According to an example embodiment, the model simulating the electrode structure may be a model identified based on the method of modeling the active material shape in the coating process during the course of the electrode structure formation described above, and in such a model, the aforementioned image may be identified by extracting an image of enlarged cross section.

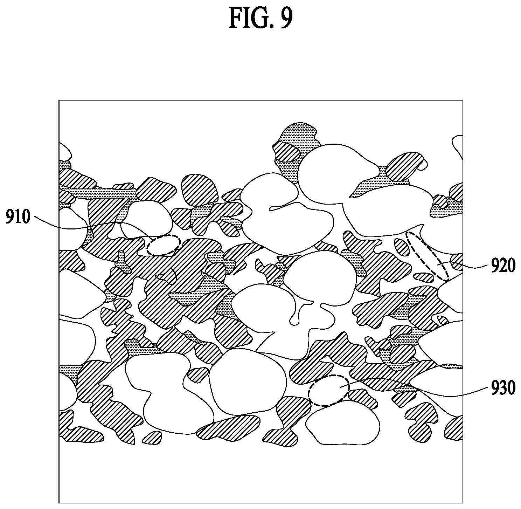

Subsequently, the electronic device 100, based on the image, may identify at least one space corresponding to a pore included in the electrode structure. Here, the pore may refer to an empty space where a particle is not filled between each particle. By such a pore, at least one space may be marked on the image. Furthermore, the electronic device 100 may identify each virtual ellipsoid of a maximum size that may be included in each pore. To describe the virtual ellipsoid, FIG. 9 is referred to.

FIG. 9 is an exemplary diagram illustrating a virtual ellipsoid generated on at least a portion of a pore included in an image according to an example embodiment.

Referring to FIG. 9, virtual maximum ellipsoids 910, 920, and 930 may be identified. The virtual ellipsoids are generated merely in some spaces in FIG. 9 for the convenience of explanation, and in practice, the virtual ellipsoids may be generated in every space.

Subsequently, the electronic device 100 may identify a distribution of a diameter of each maximum ellipsoid. The distribution of a diameter of a maximum ellipsoid may be identified by calculating in a manner that is similar to a manner used to calculate a PSD. The electronic device 100, based on the distribution of the diameter of each maximum ellipsoid, may model at least one packing particle generated by cracking of a secondary particle caused by a rolling process on at least a portion of the space.

More specifically, the electronic device 100 may identify information about a virtual ellipsoid corresponding to at least one quantile on a distribution of a diameter of a maximum ellipsoid. Here, the quantile, may be various types of quantiles, but may refer to a representative quantile, for example a median. The electronic device 100 may identify a shape of a packing particle based on the information about the virtual ellipsoid. Here, according to an example embodiment, a process of identifying the shape of the packing particle may be similar to the process to identify an active material shape in the method of modeling the active material shape in the coating process, during the aforementioned course of electrode structure formation. As an example, information about a virtual ellipsoid corresponding to a quantile may include a curvature and an aspect ratio of the virtual ellipsoid, and an active material shape may be identified through the process of comparing the curvature and a threshold, and sampling a vertex accordingly, and imparting roughness in some cases. In addition, during the aforementioned course of electrode structure formation, the packing particle may have various shapes, as similar to the example in the method of modeling the active material shape in the coating process, and as an example, may have different shapes per quantile.

Alternatively, a shape of the packing particle may be identified, after identifying an average value of the diameter of the maximum ellipsoid, based on information about a virtual ellipsoid having a diameter value that is the most similar to the average value, not based on the distribution of the diameter of the maximum ellipsoid as such.

An example embodiment to identify the shape of the packing particle in a different manner is also possible. For example, the shape of the packing particle may be identified by randomly adjusting representative vertexes of the virtual ellipsoid while maintaining the aspect ratio of the virtual ellipsoid. The process to identify the shape of the packing particle is not limited to the above description, and any process determining the shape with any generally known manner may be applied thereto.

Subsequently, the electronic device 100 may model the packing particle with at least one size corresponding to the diameter of the virtual ellipsoid corresponding to the aforementioned quantile and with the identified shape of the packing particle on at least a portion of the space. Here, according to an example embodiment, the process to identify a size may also be similar to the process to identify the size of the active material particle in the method of modeling the active material shape in the coating process during the aforementioned course of electrode structure formation.

According to an example embodiment, when modeling the packing particle on at least the portion of the space, an example embodiment to insert and model the packing particle into a randomly selected space among each space or into a space of a number corresponding to a specific ratio or a space larger than or equal to a predetermined size may be possible. Alternatively, an example embodiment to insert and model the packing particle into a space selected based on a predetermined algorithm may be also possible.

According to an example embodiment, the electronic device 100 may model the packing particle so that a quantity of the packing particle increases proportionally as the packing particle is closer to a contact surface of the electrode structure with a separator. As an example, an example embodiment to model the packing particle to have a higher possibility of being inserted in a space closer to the contact surface with the separator or to model more packing particles to be inserted in a space closer to the contact surface with the separator may be possible, but is not limited thereto.

Subsequently, the electronic device 100 may model cracking within the secondary particle. According to an example embodiment, the electronic device 100 may model cracking so that a volume of an empty space due to cracking modeled within the secondary particle corresponds to a volume of the packing particle. As a more specific example, the electronic device 100 may model the volume of the empty space due to cracking modeled within the secondary particle to be the same as the volume of the packing particle or model by calculating the volume of the empty space due to cracking based on a density of the packing particle, but is not limited thereto. In addition, according to an example embodiment, the electronic device 100 may model cracking so that the secondary particle includes an empty space in fibrous form, but is not limited thereto.

Additionally, the electronic device 100 may model cracking for the packing particle. According to an example embodiment, the packing particle may also have the empty space in fibrous form caused by cracking.

As described above, the volume of the packing particle and the volume of the empty space due to cracking may have a proportional relationship, and when calculating as such, an error may occur. A process of correcting this error may be performed, and according to an example embodiment, the electronic device 100 may compare the volume of the packing particle and the volume of the empty space and recursively adjust the volume of the packing particle or the volume of the empty space to make the two volumes appropriately correspond to each other.

Furthermore, the electronic device 100 may identify the volume of the packing particle properly corresponds to a set loading and the aforementioned PSD with regard to the design of the electrode structure and recursively correct the volume of the packing particle.

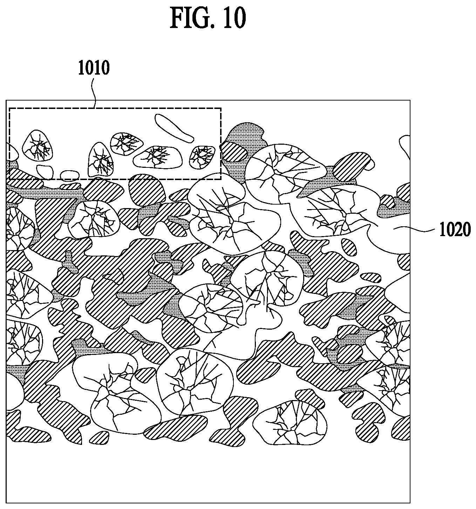

To describe an example of the electrode structure in which cracking of the secondary particle and the filling phenomenon of the packing particle in the rolling process are modeled as described above, FIG. 10 is referred to.

FIG. 10 is an exemplary diagram illustrating an electrode structure in which cracking of a secondary particle and filling phenomenon of a packing particle are modeled according to an example embodiment.

Referring to FIG. 10, it may be identified that a packing particle 1010 is filled much on a surface closer to a separator, and each includes an empty space of a fibrous form. In addition, it may be identified that a secondary particle 1020 is cracked, and each also includes an empty space of a fibrous form. In addition, it may be identified that cracking may not occur on particles other than the secondary particle.

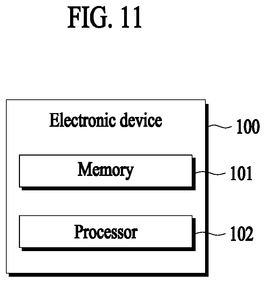

FIG. 11 is a block diagram illustrating an electronic device according to an example embodiment.

The electronic device 100, according to an example embodiment, may include a memory 101 and a processor 102. The electronic device 100 illustrated in FIG. 11 may show components related to the present example embodiments. Accordingly, it should be understood by those skilled in the art that other general-purpose components in addition to those illustrated in FIG. 11 may be further included. In an example embodiment, the processor 102 may be included in a controller.

The processor 102 may control the entire operation of the electronic device 100 and process data and a signal. The processor 102 may consist of at least one hardware unit. In addition, the processor 102 may operate by one or more software modules generated by executing a program code stored in the memory 101. As the processor 102 may include the memory, the processor 102 may control the entire operation of the electronic device 100 and process data and the signal by executing the program code stored in the memory.

The processor 102, by performing one or more instructions, may be configured to obtain an image related to a cross section of at least one active material particle, based on the image, calculate a curvature of the at least one active material particle, identify a comparison result of the curvature and a threshold, and based on the comparison result and a particle size distribution of the at least one active material particle, model the at least one active material particle included in a coated electrode structure.

Alternatively, the processor 102, by performing one or more instructions, may be configured to obtain an image related to an electrode structure including at least one secondary particle, based on the image, identify a distribution of a diameter of a virtual ellipsoid with regard to at least one pore included in the electrode structure, based on the distribution, model at least one packing particle generated by cracking of the secondary particle caused by a rolling process on at least a portion of the pore, and based on a volume of the packing particle, model the pore caused by cracking on the secondary particle.

According to example embodiments, the electronic device 100 may further include a transceiver to perform wire/wireless communications. The electronic device 100 may communicate with an external electronic device by using the transceiver. The external electronic device may be a terminal or a server. In addition, communication technology used by the transceiver may include global system for mobile communication (GSM), code division multi access (CDMA), long term evolution (LTE), 5G, wireless local area network (WLAN), wireless-fidelity (Wi-Fi), Bluetooth™, radio frequency identification (RFID), infrared data association (IrDA), ZigBee, near field communication (NFC), and the like.

The electronic device according to the aforementioned example embodiments may include a processor, a memory that stores and executes program data, and a permanent storage such as a disc drive, a communication port that communicates with an external device, and a user interface device such as a touch panel, a key, and a button. Methods embodied by a software module or an algorithm may be stored in a computer-readable recording medium as computer-readable codes or program instructions executable on the processor. Here, the computer readable recording medium may include a magnetic storage medium (for example, read-only memory (ROM), random-access memory (RAM), a floppy disc, and a hard disc) and an optically readable medium (for example, compact disc read-only memory (CD-ROM) and a digital versatile disc (DVD)). The computer readable recording medium may be distributed to computer systems connected by a network, and in a manner of distributing, the computer-readable codes may be stored and executed. The medium may be readable by a computer, stored in a memory, and executed on a processor.

The present example embodiments may be illustrated as functional block configurations and various processing operations. Such functional blocks may be implemented by various numbers of hardware and/or software configurations that perform specific functions. For example, example embodiments may adopt integrated circuit configurations such as memory, processing, logic, and look-up table that may execute various functions by the control of one or more microprocessors or other control devices. Similar to components that may be executed by software programming or software elements, the present example embodiments may be implemented in a programming or scripting language such as C, C++, Java, and assembler, including various algorithms embodied as a combination of data structures, processes, routines, or other programming configurations. Functional aspects may be implemented in an algorithm running on one or more processors. In addition, the present example embodiments may adopt the existing art for electronic environment setting, signal processing, and/or data processing, and the like. The terms such as "mechanism," "element," "means," and "configuration" may be widely used and not limited to mechanical and physical configurations. The terms may include the meaning of a series of routines of software in association with a processor and the like.

The aforementioned example embodiments are merely an example, and other example embodiments may be embodied within the scope of the claims described later.

**Claims**

1. A method of modeling an active material particle included in a coated electrode structure by an electronic device, the method comprising:

   obtaining an image related to a cross section of at least one active material particle;
   based on the image, calculating a curvature of the at least one active material particle;
   identifying a comparison result of the curvature and a threshold; and
   based on the comparison result and a particle size distribution of the at least one active material particle, modeling the at least one active material particle included in a coated electrode structure.

2. The method of claim 1,
   wherein modeling the at least one active material particle comprises:

   when the comparison result indicates that the curvature exceeds the threshold,
   based on the curvature and a first parameter, calculating a number of vertexes;
   based on the number of vertexes, identifying a three-dimensional (3D) shape of the at least one active material particle; and
   based on the 3D shape and the particle size distribution, modeling the at least one active material particle.

3. The method of claim 2,
   wherein identifying the 3D shape comprises:

   sampling vertexes corresponding to the number of vertexes on a virtual sphere; and
   based on the vertexes, identifying the 3D shape.

4. The method of claim 1,
   wherein modeling the at least one active material particle, comprises:

   when the comparison result indicates that the curvature is equal to or less than the threshold, based on the curvature and a second parameter, calculating a number of vertexes;
   based on the number of vertexes, identifying a 3D shape of the at least one active material particle;
   increasing roughness of the 3D shape by adjusting a vertex of the 3D shape while maintaining an aspect ratio of the at least one active material particle that is identified based on the image; and
   based on the 3D shape of which the roughness is increased and the particle size distribution, modeling the active material particle.

5. The method of claim 4,
   wherein the aspect ratio is identified by calculating an aspect ratio of an active material particle corresponding to at least one quantile on the particle size distribution among a plurality of active material particles.

6. The method of claim 1,
   wherein calculating the curvature comprises:
   based on the image, calculating an average of curvatures of a plurality of active material particles as the curvature of the active material particle.

7. The method of claim 1,
   wherein calculating the curvature comprises:

   based on the image, calculating a maximum diameter corresponding to a circle of a maximum size included in a boundary corresponding to the cross section of the at least one active material particle;
   calculating a diameter of each circle in contact with at least a portion of the boundary corresponding to the cross section; and
   calculating the curvature by dividing an average of the diameter of each circle in contact with at least the portion of the boundary corresponding to the cross section by the maximum diameter.

8. The method of claim 1,
   wherein modeling the at least one active material particle comprises:

modeling a plurality of the at least one active material particle to have a 3D shape simulated based on the comparison result and have at least one size value identified based on the particle size distribution.

9. The method of claim 1,
   wherein obtaining the image comprises:
   obtaining the image by shooting a current collector coated with the active material particle with a scanning electron microscope (SEM).

10. The method of claim 1, further comprising:
    by injecting the at least one active material particle into a particle size analyzer, identifying the particle size distribution of the active material particle that is measured by the particle size analyzer.

11. The method of claim 1, further comprising:
    modeling an electrode structure including the at least one active material particle.

12. An electronic device modeling an active material particle included in an electrode structure, the electronic device comprising:

    a processor; and
    a memory configured to store one or more instructions, and
    wherein the processor, by performing the one or more instructions, is configured to obtain an image related to a cross section of at least one active material particle, based on the image, calculate a curvature of the at least one active material particle, identify a comparison result of the curvature and a threshold, and based on the comparison result and a particle size distribution of the at least one active material particle, model the at least one active material particle included in a coated electrode structure.

13. A method of modeling cracking of a rolled secondary particle and filling of a packing particle by an electronic device, the method comprising:

    obtaining an image with regard to an electrode structure including at least one secondary particle;
    based on the image, identifying a distribution of a diameter of a virtual ellipsoid in at least one space related to a pore included in the electrode structure;
    based on the distribution, modeling at least one packing particle generated by cracking of the secondary particle caused by a rolling process on at least a portion of the space; and
    based on a volume of the packing particle, modeling cracking within the secondary particle.

14. The method of claim 13,
    wherein identifying the distribution comprises:
    identifying each virtual maximum ellipsoid included in each of the space; and identifying a distribution of a diameter of each of the maximum ellipsoid as the distribution.

15. The method of claim 13,
    wherein modeling the packing particle on at least the portion of the space comprises:

    identifying information about a virtual ellipsoid corresponding to at least one quantile on the distribution;
    based on the information about the virtual ellipsoid, identifying a shape of the packing particle; and
    modeling the packing particle having at least one size corresponding to a diameter of the virtual ellipsoid corresponding to the quantile and having the identified shape of the packing particle on at least the portion of the space.

16. The method of claim 13,
    wherein modeling the packing particle on at least the portion of the space comprises:
    modeling the packing particle so that a quantity of the packing particle increases proportionally as the packing particle is closer to a contact surface of the electrode structure with a separator.

17. The method of claim 13,
    wherein modeling the pore caused by cracking on the secondary particle comprises:
    modeling the pore on the secondary particle so that a volume of the pore on the secondary particle corresponds to the volume of the packing particle.

18. The method of claim 13,
    wherein modeling the pore caused by cracking on the secondary particle comprises:
    modeling the pore so that the secondary particle includes a fibrous pore.

19. The method of claim 13,

    wherein obtaining the image comprises,
    identifying a model simulating an electrode structure in which a slurry is coated on a current collector; and
    based on the model, obtaining the image with regard to the electrode structure prior to performing the rolling process.

20. An electronic device modeling an active material particle included in an
    electrode structure, the electronic device comprising:

a processor; and

a memory configured to store one or more instructions, and

wherein the processor, by performing the one or more instructions, is configured to obtain an image with regard to an electrode structure including at least one secondary particle, based on the image, identify a distribution of a diameter of a virtual ellipsoid in at least one space related to at least one pore included in the electrode structure, based on the distribution, model at least one packing particle generated by cracking of the secondary particle caused by a rolling process on at least a portion of the pore, and based on a volume of the packing particle, model a pore caused by cracking on the secondary particle.

FIG. 1

# FIG. 2

Start

Obtain image related to cross section of at least one active material particle — S210

Based on image, calculate curvature of at least one active material particle — S220

Identify comparison result of curvature and threshold — S230

Based on comparison result and particle size distribution of at least one active material particle, model at least one active material particle included in coated electrode structure — S240

End

FIG. 3A

FIG. 3B

# FIG. 4

# FIG. 5

Image input — S500

Calculate curvature — S510

Calculate aspect ratio — S520

S511

Compare threshold

Less than or equal to threshold

Calculate number of vertexes based on second parameter — S512-2

Exceed threshold

Calculate number of vertexes based on first parameter — S512-1

Sample vertex — S513-2

Sample vertex

S513-1

Impart roughness — S514

PSD input — S530

Identify size — S515

Model active material particle — S516

FIG. 6

# FIG. 7

# FIG. 8

Start

Obtain image with regard to electrode structure including at least one secondary particle — S810

Based on image, identify distribution of diameter of virtual ellipsoid in at least one space related to pore included in electrode structure — S820

Based on distribution, model at least one packing particle generated by cracking of secondary particle caused by rolling process in at least one portion of the space — S830

Based on volume of packing particle, model cracking within secondary particle — S840

End

# FIG. 9

# FIG. 10

# FIG. 11

| Electronic device | ~ 100 |
| Memory | ~ 101 |
| Processor | ~ 102 |

## INTERNATIONAL SEARCH REPORT

| | International application No. |
|---|---|
| | **PCT/KR2025/000397** |

| A. | CLASSIFICATION OF SUBJECT MATTER |
|---|---|

**G06T 17/20**(2006.01)i; **G06T 7/60**(2006.01)i; **G06T 15/04**(2011.01)i; **G06T 7/00**(2006.01)i; **H01M 4/36**(2006.01)i; **H01M 4/66**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

G06T 17/20(2006.01); G01N 15/02(2006.01); G01N 23/2251(2018.01); G01N 3/08(2006.01); G06T 7/10(2017.01); G06T 7/11(2017.01); G06T 7/13(2017.01); G06T 7/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 구조체(electrode structure), 코팅(coating), 이미지(image), 모델링(modeling), 활물질(active material), 곡선(curve), 임계치(threshold), 압연(roll), 크랙(crack), 타원(ellipse), 지름(diameter), 패킹(packing)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0048191 A (LG CHEM, LTD.) 19 April 2022 (2022-04-19) See paragraph [0019]; and claims 1-2 and 6. | 1,9-12 |
| A | | 2-8 |
| Y | KR 10-2023-0167746 A (ROBLOX CORPORATION) 11 December 2023 (2023-12-11) See claim 10. | 1,9-12 |
| Y | KR 10-2023-0072712 A (LG ENERGY SOLUTION, LTD.) 25 May 2023 (2023-05-25) See paragraphs [0042] and [0051]; claim 1; and figure 2. | 13,18-20 |
| A | | 14-17 |
| Y | JP 2023-055258 A (KURIMOTO LTD.) 18 April 2023 (2023-04-18) See claims 2-3. | 13,18-20 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2025** | **13 May 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2025/000397** |

**C.   DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0063821 A (DAEGU GYEONGBUK INSTITUTE OF SCIENCE AND TECHNOLOGY) 02 June 2021 (2021-06-02)<br>See claim 2; and figure 1. | 19 |
| A | KR 10-2022-0048192 A (LG CHEM, LTD.) 19 April 2022 (2022-04-19)<br>See paragraph [0010]; and claims 1-8. | 1-20 |
| A | KR 10-2023-0052754 A (LG CHEM, LTD.) 20 April 2023 (2023-04-20)<br>See paragraphs [0009]-[0018]; and claims 1-4. | 1-20 |

Form PCT/ISA/210 (second sheet) (July 2022)

## INTERNATIONAL SEARCH REPORT

| International application No. |
|---|
| **PCT/KR2025/000397** |

---

**Box No. III     Observations where unity of invention is lacking (Continuation of item 3 of first sheet)**

This International Searching Authority found multiple inventions in this international application, as follows:

The invention of group 1: claims 1-12 pertain to a method for modeling active material particles included in a coated electrode structure,
The invention of group 2: claims 13-20 pertain to a method for modeling the cracking of rolled secondary particles and the filling of packed particles.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/KR2025/000397**

| Patent document cited in search report | | | Publication date (day/month/year) | Patent family member(s) | | | Publication date (day/month/year) |
|---|---|---|---|---|---|---|---|
| KR | 10-2022-0048191 | A | 19 April 2022 | None | | | |
| KR | 10-2023-0167746 | A | 11 December 2023 | CN | 117173371 | A | 05 December 2023 |
| | | | | EP | 4287134 | A1 | 06 December 2023 |
| | | | | JP | 2023-178274 | A | 14 December 2023 |
| | | | | JP | 7601944 | B2 | 17 December 2024 |
| | | | | US | 11954802 | B2 | 09 April 2024 |
| | | | | US | 12141921 | B2 | 12 November 2024 |
| | | | | US | 2023-0394764 | A1 | 07 December 2023 |
| | | | | US | 2023-0394767 | A1 | 07 December 2023 |
| | | | | US | 2024-0221317 | A1 | 04 July 2024 |
| KR | 10-2023-0072712 | A | 25 May 2023 | None | | | |
| JP | 2023-055258 | A | 18 April 2023 | None | | | |
| KR | 10-2021-0063821 | A | 02 June 2021 | None | | | |
| KR | 10-2022-0048192 | A | 19 April 2022 | None | | | |
| KR | 10-2023-0052754 | A | 20 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240052239